# EUROPEAN PATENT SPECIFICATION

(11) **EP 2 268 126 B1**
(45) Date of publication and mention of the grant of the patent: **18.04.2012**
(21) Application number: 09735378.3
(22) Date of filing: 22.04.2009
(51) Int. Cl.: A01G 31/00

(54) **Method of growing plants**
Pflanzenzuchtverfahren
Procédé de culture de plantes

(30) Priority: 22.04.2008 EP 08251482
(43) Date of publication of application: 05.01.2011
(73) Proprietor: Rockwool International A/S, 2640 Hedehusene (DK)
(72) Inventor: BOUWENS, Paul, NL-6040 KD Roermond (NL); HEMPENIUS, Eelke, NL-6040 KD Roermond (NL)
(74) Representative: Samuels, Lucy Alice
(86) International application number: PCT/EP2009/002940
(87) International publication number: WO 2009/130021

(56) References cited:
- EP-A- 0 416 838
- WO-A-94/08448
- WO-A-96/03858
- NL-A- 8 502 065

## Description

The invention relates to methods of growing plants, in particular flower crops, using mineral wool growth substrates.

It has been well known for many years to propagate cuttings for flower crops in growth substrates formed from mineral wool. Once the cuttings have rooted and developed leaves in a first growth substrate they are usually transferred to a second growth substrate. One of the flower crops commonly propagated and grown in mineral wool growth substrates is rose.

It is conventional for the growing process to be started at a propagator's facility and for the propagator then to transfer the plants at an appropriate stage to a grower's facility where the growing process is completed and the flowers harvested.

The current propagation and completion of growing system which is normally used for rose cuttings is as follows:
(a) A single cutting, pre-treated with root stimulator, is placed in a cut-out in a block of mineral wool growth substrate, usually of size around: such as length 7.5 cm x width 7.5 cm x height 6.5 cm, or length 10 cm x width 10 cm x height 6.5 cm.
(b) The roots and the shoot are allowed to grow. After about four weeks, roots have developed throughout the block and the primary shoot, still in the block, is then sent from the propagator to the grower.
(c) The grower positions these blocks on a single slab, usually of size around 1 m (length) x 0.2 m (width) x 0.075 m (height). Usually there are around 8 blocks (and hence 8 plants) per slab.
(d) The primary shoots are then allowed to root in to the slab, which takes about 4 days.
(e) After around 2 to 3 weeks a bud is generated and is cut off (disbudding) which generates more stem and leaf volume. It is necessary to do this in order to have enough leaves on the stem.
(f) After two further weeks the entire stem is bent downwards to create apical dominance and induce formation of further shoots growing upwards.
(g) After 5 to 6 more weeks these further shoots can be harvested (although they are generally of low quality) - this is termed the "first flush" - and after six further weeks there are further shoots - the "second flush" - which can be harvested and are of higher quality. Further flushes can be generated. Normally about 5 to 6 flushes are achievable in the first year, with 6 to 7 flushes in each subsequent year. Normally the plants are kept for about 4 to 6 years.

This system means that the propagator is responsible for the cuttings for around 4 weeks and then the grower is responsible for them for a considerable period of weeks before a harvestable flower, e.g. rose, is generated. In practice this means that a grower often does not make any profit from flower crops generated during the first year of growth. The long period of time for which the grower is responsible for the plants before a harvestable crop is generated also means that it is more difficult for the grower to time a crop to match specific times of year when flower crops are particularly required (for instance Mothers' Day and other feast days).

It would be desirable to provide a growing method which allows ultimately better root and shoot development and hence a better quality of flower and which can also lead to a harvestable flower crop in a shorter period of time.

Particular problems arise when a growth substrate is to be used for propagation. For optimum propagation of the cuttings being grown, propagators would ideally like to supply water frequently to the substrate. Unfortunately, this has a problem that the growth substrate then becomes too wet and this has a negative effect on the growth of the plants, especially because in periods of low light intensity it can result in a high risk of disease.

Accordingly, it would be desirable to provide a propagation and growing method which alleviates these disadvantages.

Despite these disadvantages, methods of this general type have been consistently used throughout the growing industry, in particular for growing roses, for around 25 years.

WO 96/03858 is an example of the art in this area relating to growth of perennial plants such as rose cuttings. This uses, as discussed above, a propagation block of the type mentioned in step (a) above, having dimensions 10 cm x 10 cm x 6.5 cm. This publication uses the traditional system and provides an improved propagation block which is designed to avoid excessive growth of weeds.

Other plant growth systems, for instance for plants other than roses, involve a system of three growth substrates. The first growth substrate is a small plug of mineral wool into which a seed is sown. This plug is then, after a period of growth, inserted into a block, usually of the same size as the propagation blocks discussed in section (a) above. These blocks are then transferred on to a mineral wool mat/slab where growth is continued. Such systems are also traditional and are described in, for instance, WO 94/08448 and EP-A-416838.

Neither of these is concerned with growth of perennial plants such as roses and neither gives detail of the time period for which the plants are grown in any of the growth substrates. EP-A-416838 confirms that the propagation block has volume approximately 1 litre, similar to (if slightly larger than) those discussed above in section (a). The size of the bigger mineral wool body/cube in WO 94/08448 is not specified, but the document describes a standard traditional method in which the blocks are of this general dimension.

According to the invention, we provide a method of growing a flower crop comprising:
positioning a plant in the form of a cutting of the crop in a first coherent mineral wool growth substrate having a volume not more than 150 cm³,
allowing the plant to root and grow for at least 12 days,
transferring the plant within the first coherent mineral wool growth substrate so that the first coherent mineral wool growth substrate is in contact with a second coherent mineral wool growth substrate having width at least 5 cm and height at least 5 cm,
and allowing the plant to grow for at least a further 4 weeks before any harvesting of flower crop takes place.

We find that use of this system means that much greater root and shoot development can be obtained at the stage when the propagator is responsible for the plants (taking a longer time) and when the plant is given to the grower, far less work is required by the grower and there is less time to wait before the plant is ready for harvest. Furthermore, this is not just a question of changing the responsibility for the same steps. Instead, the overall period from cutting to final harvest is shorter and the overall number of action steps that must be taken is reduced.

This is beneficial in that the grower can then make a profit in the first year and hence also has the opportunity to change to a different crop at an earlier stage. It is also easier to control the point at which the flowers are harvestable and time this with feast days.

In general, in the invention the propagator is responsible for growth of the plants in the first coherent mineral wool substrate before transfer to the second coherent mineral wool growth substrate and for an extended period after that transfer. Because of the choice in the invention of the sizes of the two mineral wool growth substrates, it is possible for the propagator to retain responsibility for the plants for a much greater period of time than with the traditional method. This is particularly the case when the second coherent mineral wool growth substrate has volume at least 1200 cm³, preferably at least 1500 or 2500 cm³ and/or width at least 12 cm and length at least 15 cm coupled with height at least 5 cm.

Under the traditional system it would simply not have been possible for the propagator to retain responsibility for the plant for more than around 4 or 5 weeks, perhaps to a maximum of 6 weeks, because the volume of the traditional block substrate would not normally be sufficient to allow the roots to develop beyond this stage. Additionally, its volume would not normally be sufficient to store the amount of water needed by growing roses at, for instance, the 10 to 12 week stage, which need a very high level of water. For instance, at these stages they can wilt even if left overnight without watering.

With the system of the invention, the propagator is able to retain responsibility for the plants for up to 9 or even 12 or 14 weeks. This means that the propagator has an opportunity to introduce more than one selection stage. In the traditional system it is normal for the propagator to select at the point when the plants growing in the traditional blocks are to be transferred to the grower. At this point plants of insufficiently high quality are not transferred but are instead discarded. In the system of the invention a selection stage can be introduced at the point where the plant, in the first coherent mineral wool growth substrate, is transferred to the second coherent mineral wool growth substrate. A further selection stage can be introduced at the point where the plant, in the second coherent mineral wool growth substrate, is transferred to the grower's facility. With the traditional system it would not be possible simply to add a selection stage at some earlier point than the transfer, in the propagation block, from the propagators facility to a slab at the grower's facility, because selection of plants is only effective after around 3 weeks of growth. Prior to that it is not possible to tell with sufficient reliability whether or not a plant is of inferior quality.

It should be noted that the reason why traditional propagation and final growing take place at different facilities, and still preferably do in the invention, is partly because the expertise required for growing early stage plants is different from that required for growing late stage plants, and partly because the conditions required for propagation are not the same as the traditions required for the final growing stage. For instance, a propagator can propagate a large number of plants in a relatively small area or greenhouse and thus with relatively low energy costs. Propagation is commonly carried out using ebb/flood irrigation. In contrast, the final growing stages should be carried out in a much greater area of greenhouse, thus resulting in much higher energy costs. The system of the invention, which allows this latter stage to be shortened, thus can lead to greatly reduced energy costs in the overall growing process.

The invention is concerned with growth of flower crops, that is, flowering plants that are grown for their flowers. It is the flowers that are harvested and ultimately sold. The flower crop can preferably be a perennial plant. It can be a woody plant. Preferably it is rose. Other flower crops to which the invention is applicable include Bouvardia, cut Hydrangea, Gerbera, Orchid and Anthurium.

The plant is incorporated into the first mineral wool growth substrate as a cutting.

The first coherent mineral wool growth substrate can be formed of glass wool or slag wool but is usually stone wool. Stone wool generally has a content of iron oxide at least 3% and alkaline earth metals (calcium oxide and magnesium oxide) from 10 to 40%, along with the other usual oxide constituents of mineral wool. These are silica, alumina, alkali metals (sodium oxide and potassium oxide), usually in low amounts and can also include titania and other minor oxides. In general it can be any of the types of man-made vitreous fibre which are conventionally known for production of growth substrates. Fibre diameter is often in the range 3 to 20 microns, in particular 5 to 10 microns, as conventional.

The first mineral wool growth substrate is in the form of a coherent mass. That is, the growth substrate is generally a coherent matrix of mineral wool fibres, which has been produced as such, but can also be formed by granulating a slab of mineral wool and consolidating the granulated material.

The first mineral wool growth substrate usually comprises a binder, often an organic binder, which is generally heat-curable. The growth substrate is preferably a coherent matrix of mineral fibres connected by cured binder. The binder can be an organic hydrophobic binder, and in particular it can be a conventional heat-curable (thermosetting), hydrophobic binder of the type which has been used for many years in mineral wool growth substrates (and other mineral wool based products). This has the advantage of convenience and economy. Thus, the binder is preferably a phenol formaldehyde resin or urea formaldehyde resin, in particular phenol urea formaldehyde (PUF) resin. It can be a formaldehyde free binder such as a polyacrylic acid based binder or an epoxy based binder.

The binder is generally present in the first coherent mineral wool growth substrate in amounts of from 0.1 to 10% based on the substrate, usually 0.5 to 5%, most preferably 1.5 to 5%.

The first mineral wool growth substrate preferably also comprises a wetting agent. This can be a conventional wetting agent such as a non-ionic surfactant. Alternatively it can be an ionic surfactant, preferably an anionic surfactant. For instance it can be any of the ionic surfactants described in our publication WO2008/009467.

The wetting agent is present in the first mineral wool growth substrate in amounts preferably from 0.01 to 3% (by weight), based on growth substrate, more preferably 0.05 to 1%, in particular, 0.075 to 0.5%.

Preferably the amount (by weight) of wetting agent based on the weight of binder (dry matter) is in the range 0.01 to 5%, preferably 0.5 to 4%.

The first mineral wool growth substrate may contain other types of conventional additives in addition to binder and wetting agent, for instance salts such as ammonium sulphate and adhesion promoters such as silanes.

Density of the first mineral wool growth substrate can be up to 200 kg/m³ but is generally in the range 10 to 150 kg/m³, often in the range 30 to 100 kg/m³, preferably in the range 35 to 90 kg/m³. It can be at least 45kg/m³.

Preferably the fibres are arranged predominantly in the vertical direction. This has the advantage of allowing better root growth than other orientations and enables the provision of a robust substrate which is useful during transplantation to the next stage.

The first mineral wool growth substrate is significantly smaller than the standard first growth substrate used for flower crops (traditionally known as a propagation block). It has a volume up to 150 cm³. Preferably it is not more than 140 cm³, more preferably not more than 130 cm³, especially not more than 120 cm³, in particular not more than 100 cm³, and more preferably is not more than 80 cm³. most preferably not more than 75 cm³. Usually it is at least 25 cm³, preferably at least 50 cm³. It can be not more than 70 cm³ but a volume of at least 70 cm³ can be desirable in some cases.

Preferably the height is not more than 7 cm, in particular not more than 6 cm. It can be desirable for the height to be at least 2.5 cm, preferably at least 4 cm, especially at least 5.5 cm. This results in improved water retention and slower drying out in comparison with first mineral wool growth substrates of lower height. It can also lead to improved stability when the first mineral wool growth substrate is positioned in a cut-out in the second mineral wool growth substrate. Preferably the width (herein, the minimum cross-dimension at the top surface of the substrate when oriented as for use) is not more than 6 cm and in particular not more than 5 or not more than 4 cm. Preferably the length (herein, cross-dimension perpendicular to the width direction) is not more than 6 cm and in particular not more than 5 or not more than 4 cm.

The use of a small volume first mineral wool growth substrate has a number of advantages. This means that it is possible to water the substrate more often without saturating it. As a result, the increased evaporation has the effect that more oxygen can penetrate into the substrate, enabling the roots to develop better and faster.

The choice of a relatively small first mineral wool growth substrate, which is believed to be smaller even than those already known for propagation of cuttings, appears to enable a particular watering and treatment pattern which allows better root development at the first stage. It also has the advantage that it is easier to fit these substrates into the second mineral wool growth substrate rather than placing them on top of it.

The first mineral wool growth substrate may be cylindrical or cubic or cuboid in shape but is preferably frustoconical, with the wider end at the top surface in use.

In the method, plants are positioned in the mineral wool growth substrate for growth. More than one cutting may be positioned in a single unit of first mineral wool growth substrate but preferably each unit has only one cutting.

Usually the first mineral wool growth substrate will have a cut-out for the (or each) cutting to be positioned in it. This may be substantially cylindrical or substantially conical or a combination of a top section which is frustoconical and a lower section which is substantially cylindrical.

Prior to positioning the cuttings in the first mineral wool growth substrate the substrate is preferably watered, for instance by soaking for about 12 hours or more, after which the cuttings are added (usually instantly).

The cuttings are grown in the first mineral wool growth substrate for at least 12 days, preferably at least 18 days and can be grown in this substrate for at least 3, 4 or 5 weeks. They can be grown in this substrate for up to 2 months or as much as 10 weeks.

In this stage the cuttings can be subjected to a cooling storage method during which they are stored at a temperature of from 2 to 5 °C, preferably for at least four days. Preferred cooling periods are relatively short, namely from 2 days up to 2 or 3 weeks, preferably up to 8 days, which has the effect of providing plants which are ultimately stronger and of better quality. This storage can be for a longer period, for instance at least 2, 3 or 4 weeks and can be for at least 5 weeks, up to as much as 8 or 10 weeks. This longer storage period has the benefit of allowing the possibility of storing plants when the propagator is not ready to grow them further.

It is believed that the use of a small first growth substrate allows the use of frequent watering during the sage before transfer to the second mineral wool growth substrate, (for instance at least once every 4 days, in particular at least once every 3 days, preferably at least once every 2 days) and can be at least daily, especially in summer without reducing oxygen in the first mineral wool growth substrate to a disadvantageously low level. If it were attempted to water a mineral wool growth substrate of the size which is standard in the first stage of rose propagation (i.e. a propagation block) as frequently as this would lead to undesirably low oxygen levels.

The cuttings are irrigated with water and nutrients. The preferred use of ionic surfactant has the advantage that loss of the wetting agent to the irrigation water is minimal, allowing for a system in which there is essentially no anti-foam material in the irrigation water.

Non-conventional irrigation methods can be used, specifically irrigation can be from the base of the substrate. Thus, tidal irrigation can be used. A growth substrate can be placed for irrigation in a container passing through a gutter. Alternatively, conventional irrigation methods can be used in the invention, such as top irrigation.

As a result of using a small first mineral wool growth substrate, which enables a beneficial watering pattern, the root growth within the first substrate is higher and better than root growth in the standard system using a larger first growth substrate. As a result of this, the leaf volume on the primary shoot is high enough already that it is not necessary to carry out the disbudding step in order to generate secondary growth. In practice the propagator can disbud anyway to prevent flowering and use of nutrients by the flower, but it is nevertheless still unnecessary to wait for development of the secondary growth. This means step (e) can be eliminated altogether and step (f) can be carried out at a much earlier stage and the first roses are ready for harvesting at an earlier point and are often of higher quality.

WO03/003815 discloses a special cutting method which improves cutting development and ultimate flower formation. This involves the use of a specialised growth hormone solution and particular timings of treatment and subjecting the cuttings to defined temperatures. This system is useful in combination with the system of the invention.

In the invention the cuttings are grown in the first mineral wool growth substrate and then transferred, still in the first mineral wool growth substrate, to the second mineral wool growth substrate. This is normally done after the cuttings have rooted. It can be preferred, especially when the crop is rose, that the cuttings are transferred before they have developed leaves.

The transfer takes place after at least 12 days of growth, preferably at least 14 days. Generally it takes place after not more than 4 or 5 weeks, preferably not more than 3 weeks of growth.

Prior to positioning the first mineral wool growth substrate in the second mineral wool growth substrate, the second substrate is preferably watered, for instance by soaking for about 12 hours or more, after which the first mineral wool growth substrates are added.

This second mineral wool growth substrate is larger than the first mineral wool growth substrate and has the following dimensions: width (defined as above) at least 5 cm and height at least 5 cm. Preferably it has width in the range 7.5 to 30 cm. Preferably the length (defined as above) is in the range 7.5 to 100 cm, more preferably up to 60 cm. Preferably the height is in the range 6.5 to 20 cm, especially up to 16cm.

In particular, the width is at least 12 cm. In particular the length is preferably at least 15 cm. Preferably the height is at least 7.5 cm. One preferred second mineral wool growth substrate has length 24 cm, width 20 cm and height 7.5 cm. Another preferred second mineral wool growth substrate has length 40 cm, width 12 cm and height 7.5 cm.

The second mineral wool growth substrate preferably has volume at least 500, more preferably at least 1200, especially at least 1500 cm³. In particular it is desirable for it to be significantly larger than a standard propagation block. In preferred embodiments it has volume at least 2000, especially at least 2500 cm³, and in particularly preferred embodiments it has volume at least 3000.

In its other characteristics than its dimensions the second mineral wool growth substrate can, independently, have the preferred characteristics discussed above for the first mineral wool growth substrate.

Prior to the transfer of the first mineral wool growth substrate, containing the plant, into contact with the second mineral wool growth substrate, preferably a selection step is undertaken. In this embodiment a plurality of plants are being grown. The operator of the method determines the quality of plants that will be required for transfer to the next stage. Plants having insufficiently high quality are not transferred but are instead discarded.

The transfer is effected by positioning the first mineral wool growth substrate, containing the plant, in contact with the second mineral wool growth substrate. This can be done simply by positioning the first mineral wool growth substrate on the top surface of the second mineral wool growth substrate. However, in a preferred method each first mineral wool growth substrate is placed within a cut-out in a second mineral wool growth substrate. This has the advantage of providing a system which is physically stable and easy to transport and also allows more rapid root development within the second mineral wool growth substrate. Positioning the first mineral wool growth substrate inside a cut-out in the second mineral wool growth substrate is also believed to have an advantage generated by causing some minor damage to the exposed roots, which leads to their more rapid regeneration during rooting-in.

It is desirable for the first mineral wool growth substrate to fit closely into the cut-out in the second mineral wool growth substrate. The adjacent surfaces are preferably in contact over a high proportion of their area. This maximises the advantages mentioned above. Preferably the side and bottom surfaces of the cut-out in the second mineral wool growth substrate are generally contiguous with at least 50%, preferably at least 90%, of the area of the surfaces of the first mineral wool growth substrate other than the top surface.

Each unit of second mineral wool growth substrate can contain one or more units of first mineral wool growth substrate, and preferably contains two units of first mineral wool growth substrate, each of these units of first mineral wool growth substrate containing one plant.

Preferably the combination of one unit of second mineral wool growth substrate and however many first mineral wool growth substrates are in contact with it are wrapped in polymeric film, usually surrounding the sides, bottom surface and top surface and allowing the plant or plants to protrude from the top. This is helpful for transport from one facility to another.

When the units of second mineral wool growth substrate are wrapped in polymeric film they usually contain one or more drainage holes in the film to allow drainage of water. Preferably there are two in each unit of second mineral wool growth substrate.

Each second mineral wool growth substrate preferably contains two cut-outs for containing a single first mineral wool growth substrate in each cut out. Generally each unit of second mineral wool growth substrate is cuboid. Two cut-outs for plants in first mineral wool growth substrate are preferably positioned at diagonally opposite corners, with drainage holes positioned at each of the other corners.

Preferably each unit of second mineral wool growth substrate will also contain one or more (but preferably one) irrigation holes.

The plants are then allowed to grow in this situation for at least 4 weeks, preferably at least 5 or 6 weeks, in particular at least 7 weeks or at least 8 weeks. After this a flower crop can be cut. Generally this cropping happens at the grower's facility, after transfer from the propagator's facility.

Generally the first stage prior to transfer of the first mineral wool growth substrate, containing the plant, to the second mineral wool growth substrate is carried out at a first growing facility. Then after the transfer further growth is usually carried out at the same growing facility for at least another 4 or at least 5 and often at least 6 further weeks, before the second mineral wool growth substrate units are transferred to a second growing facility. This is generally needed because as the plants increase in size it is necessary to irrigate them in a different way and to provide a greater area for growth and this is best achieved at a second specialised growing facility.

The method of the invention allows a much larger proportion of the growing process to be carried out in one facility (the first facility), namely that of the propagator. For instance, growth in or on the second mineral wool substrate at the propagator's facility can be carried out for at least 2, 3, or 4 weeks, in particular at least 6 or at least 8 weeks. This means that when the plants are transferred to the grower there is a much shorter time than is conventional until a harvestable flower crop is available.

This means that at the second facility there may be a period of less than 3 weeks before harvestable flowers are available.

Prior to the transfer of the second mineral wool growth substrate, containing the plant, to the second growing facility, preferably a selection step is undertaken. In this embodiment a plurality of plants are being grown. The operator of the method determines the quality of plants that will be required for transfer to the next stage. Plants having insufficiently high quality are not transferred but are instead discarded.

In the invention at least one plant is grown. Generally a plurality of plants are grown, in particular at least 10 or at least 30 or most often at least 50, preferably at least 100.

The mineral wool growth substrates can be made in conventional manner. That is, they can be made by providing solid mineral raw materials, melting these raw materials to form a melt and forming the melt into fibres, collecting the fibres as a primary web and consolidating the collected fibres. A binder is, conventionally, usually added by spraying on to the fibres after formation but before collection and consolidation. In the invention the binder is usually a curable binder and is normally cured as the consolidated product passes through a curing oven. After this the product is cut into the desired sizes.

Curing is normally in an oven at a temperature of around 200°C or greater, often at least 220°C, for instance in the range of 220 to 275 or up to 290°C. Examples of curing temperatures are 225, 240 and 250°C.

Binder is usually applied to the fibres by spraying of a solution of the binder components in finely divided/atomised form.

Wetting agent is also generally applied to the fibres as an atomised/finely divided spray, usually as a solution or dispersion, but can be in neat form if the wetting agent is itself a liquid.

Wetting agent and binder may be applied to the fibres simultaneously or separately. If they are applied simultaneously, this may be as a result of spraying onto the fibres a single liquid composition which comprises both binder components and wetting agent. Such a composition may, for instance, be produced before transport of the composition to the fibre production facility. Alternatively, the materials may be blended at the fibre production facility. As a further alternative they may be blended in-line just before spraying takes place.

Alternatively, wetting agent and binder components may be applied separately but simultaneously to the fibres.

In general, application is usually by a spray into the spinning chamber into a cloud of the just-formed fibres. This results in distribution of the wetting agent on the surfaces of the fibres.

### Examples

### Example 1

In this example results are described of the trial of a system according to the invention and comparison with a traditional system.

During the period May to December both the traditional as well as the new system were tested at a propagator and grower in the Netherlands.

The new system was 2-3 weeks earlier in production (July vs August as first harvest for the traditional system)

The harvest on the new system over the period of July to December was 29,4% higher than the traditional system; 21% could be linked towards being earlier in production, 8% could be linked to improved quality of the plants on the new system
→ based on these results calculations were made that prove that the predictable harvest increase with the new system should be at least 7%.

The quality of the harvested roses was at least equally good on both the new and the traditional system. Due to the 2 selection steps applied in the new system, the amount of plants lost during the cropping (due to bad seed quality, diseases etc) was diminished: In order to deliver 100 good plants to a grower:
- in the traditional system the propagator had to plant 115 propagation blocks at the start of the propagation. 15 of the 115 were lost to poor quality
- in the new system
   → the propagator had to plant 105 plants on plugs (the first mineral wool growth substrate) → 3 of the 105 were lost during that phase and only 102 were transplanted onto the second mineral wool growth substrate
   → from the 102 plants on the second mineral wool growth substrate 2 were lost additionally and 100 were delivered to a grower.
   → So in summary, less extra plants were needed at the start (5 vs 15) and the loss during propagation was less. In variations of the method of the invention the precise loss values could be different.

Water and EC management:
In the new system the water and EC content can be maintained on a stable,
more or less fixed level of 80% WC and EC 1.6 EC. These are the ideal settings for getting the best plant growth and highest yields. In the practical trials it was demonstrated that due to the chosen smaller substrate volumes in the new system:
   Plants could be watered 3-4 times more in the first 4 weeks

As a result the WC and EC within the substrate could be kept rather stable at 80% water content and an EC about 1,6.

This stable WC and EC content contributed to the improved yield

Product use:
For practical handling in the greenhouse and stability of the plugs in the SPU-unit it was established (based on practical use of tested products) that the shape and dimensions of the plugs should preferably be:
   Conical/frustoconical plugs with dimensions at least 36*36*40 mm but more preferably
   Conical/frustoconical plugs with increased height and dimensions at least 36*36*55 mm

In trials it was determined that:
A smaller volume than 36*36*40 mm resulted in quicker drying out of plugs and thus in reduced growth
If a steeper bending angle is applied in practice, a plug height of 55 mm is beneficial for stability reasons

Specification of the cropping protocol:
Besides the practical trial at a grower, smaller more fundamental trials were executed to establish the best cropping method. In these trials it was established that for maximum yield and growth speed of the plants:
   The EC level in the plugs and the second mineral wool growth substrate should be kept most preferably at a stable EC level of 1,6 but preferably below 2
   The water content in the first and second mineral wool growth substrates should be kept most preferably at a stable WC of 80% but preferably between 70 and 85% and at least not higher than 90% or lower than 65%.
   The number of ground shoots should be at least 1,6 per plant, preferably at least 1,8 per plant and most preferably more than 2 per plant. The length of the bottom shoots per plant should develop at the same pattern/growth rate.

## Claims

1. A method of growing a flower crop comprising:
positioning a plant in the form of a cutting of the crop in a first coherent mineral wool growth substrate having a volume not more than 150 cm³,
allowing the plant to root and grow for at least 12 days,
transferring the plant within the first coherent mineral wool growth substrate so that the first coherent mineral wool growth substrate is in contact with a second coherent mineral wool growth substrate having width at least 5 cm and height at least 5 cm,
and allowing the plant to grow for at least a further 4 weeks before any harvesting of flower crop takes place.

2. A method according to claim 1 comprising watering the plant whilst it is positioned in the first coherent mineral wool growth substrate at least once every three days, preferably at least once every two days.

3. A method according to claim 1 or claim 2 in which the flower crop is a perennial.

4. A method according to any preceding claim in which the flower crop is rose.

5. A method according to any preceding claim in which the contact between the first coherent mineral wool growth substrate and the second coherent mineral wool growth substrate is achieved by providing a cut-out in the second coherent mineral wool growth substrate into which a single first coherent mineral wool growth substrate is placed.

6. A method according to any preceding claim in which two first coherent mineral wool growth substrates are contacted with a single second coherent mineral wool growth substrate.

7. A method according to any preceding claim in which the volume of the first coherent mineral wool growth substrate is not more than 80 cm³.

8. A method according to any preceding claim in which the first coherent mineral wool growth substrate has a height of at least 2.5 cm, preferably at least 4 cm, more preferably at least 5.5 cm.

9. A method according to any preceding claim in which the transfer of the plant within the first coherent mineral wool growth substrate to the second coherent mineral wool growth substrate is done after the plant has been allowed to root and grow in the first mineral wool growth substrate for at least 14 days.

10. A method according to any preceding claim in which the transfer of the plant within the first coherent mineral growth substrate to the second mineral wool growth substrate is done after the plant has been allowed to root and grow in the first mineral wool growth substrate for not more than 4 weeks, preferably not more than 3 weeks.

11. A method according to any preceding claim in which a plurality of plants are grown and in which prior to transfer of the plants within the first coherent mineral wool growth substrate to the second coherent mineral wool growth substrate a selection step is undertaken whereby plants of insufficiently high quality are not transferred but are instead discarded.

12. A method according to any preceding claim in which the second coherent mineral wool substrate has length in the range 7.5 to 100 cm, width in the range 7.5 to 30 cm and height in the range 6.5 to 20 cm.

13. A method according to any preceding claim in which the second coherent mineral wool substrate has length in the range 7.5 to 60 cm, width in the range 7.5 to 30 cm and height in the range 6.5 to 16 cm.

14. A method according to any preceding claim in which the second coherent mineral wool substrate has volume at least 1200 cm³, preferably at least 1500 cm³, more preferably at least 2500 cm³.

15. A method according to any preceding claim in which the second coherent mineral wool substrate has length in the range 19 to 29 cm, width in the range 15 to 25 cm and height in the range 6 to 10 cm.

16. A method according to any of claims 1 to 14 in which the second mineral wool growth substrate has at length in the range 35 to 45 cm, width in the range 8 to 16 cm and height in the range 6 to 10 cm.

17. A method according to any preceding claim in which the plant is stored at a temperature in the range 2 to 5 °C for at least four days whilst positioned in the first coherent mineral wool growth substrate and before transfer to the second coherent mineral wool growth substrate.

18. A method according to claim 17 in which the period of storage at 2 to 5 °C is up to 10 weeks.

19. A method according to any preceding claim in which after transfer of the first coherent mineral wool growth substrate to the second coherent mineral wool growth substrate the plant is allowed to grow for at least a further six weeks and all of these steps take place in a first growing facility and the second coherent mineral wool growth substrate is then transferred to a second growing facility, and before this transfer a selection step takes place in which plants of insufficiently high quality are not transferred but are instead discarded..

## Patentansprüche

1. Ein Verfahren zum Züchten von Blumen bestehend aus folgenden Schritten:
Positionieren einer Pflanze in Form eines Ablegers der Pflanze in ein erstes verbundenes Wachstumssubstrat aus Mineralwolle mit einem Volumen von nicht mehr als 150 cm³;
die Pflanze mindestens 12 Tage Wurzeln ziehen und wachsen lassen;
die Pflanze im ersten verbundenen Wachstumssubstrat aus Mineralwolle versetzen, damit das erste verbundene Wachstumssubstrat aus Mineralwolle mit einem zweiten verbundenen einer Breite von mindestens 5 cm und einer Höhe von mindestens 5 cm in Kontakt ist,
und die Pflanze mindestens weitere 4 Wochen wachsen zu lassen, bevor die Blumen geerntet werden.

2. Ein Verfahren entsprechend Anspruch 1, wobei die Pflanze mindestens alle drei Tage, bevorzugt jedoch mindestens alle zwei Tage, gegossen wird, während sie im ersten verbundenen Wachstumssubstrat aus Mineralwolle ist.

3. Ein Verfahren entsprechend Anspruch 1 oder 2, wobei es sich bei der Blume um eine mehrjährige Pflanze handelt.

4. Ein Verfahren entsprechend einem der vorangegangenen Ansprüche, wobei die Blume eine Rose ist.

5. Ein Verfahren entsprechend einem der vorangegangenen Ansprüche, bei dem der Kontakt zwischen dem ersten verbundenen Wachstumssubstrat aus Mineralwolle und dem zweiten verbundenen Wachstumssubstrat aus Mineralwolle durch einen Ausschnitt im zweiten verbundenen Wachstumssubstrat aus Mineralwolle, in den das erste verbundene Wachstumssubstrat aus Mineralwolle eingesetzt wird, erzielt wird.

6. Ein Verfahren entsprechend einem der vorangegangenen Ansprüche, bei dem zwei erste verbundene Wachstumssubstrate aus Mineralwolle mit einem einzelnen zweiten verbundenen Wachstumssubstrat aus Mineralwolle in Kontakt sind.

7. Ein Verfahren entsprechend einem der vorangegangenen Ansprüche, bei dem das Volumen des ersten verbundenen Wachstumssubstrats aus Mineralwolle nicht mehr als 80 cm³ beträgt.

8. Ein Verfahren entsprechend einem der vorangegangenen Ansprüche, bei dem das erste verbundene Wachstumssubstrat aus Mineralwolle eine Höhe von mindestens 2,5 cm, bevorzugt mindestens 4 cm und am meisten bevorzugt mindestens 5,5 cm aufweist.

9. Ein Verfahren entsprechend einem der vorangegangenen Ansprüche, bei dem das Versetzen der Pflanze im ersten verbundenen Wachstumssubstrat aus Mineralwolle in das zweite verbundene Wachstumssubstrat aus Mineralwolle erfolgt, nachdem die Pflanze im ersten verbundenen Wachstumssubstrat aus Mineralwolle mindestens 14 Tage Wurzeln ziehen und wachsen konnte.

10. Ein Verfahren entsprechend einem der vorangegangenen Ansprüche, bei dem das Versetzen der Pflanze im ersten verbundenen Wachstumssubstrat aus Mineralwolle in das zweite verbundene Wachstumssubstrat aus Mineralwolle erfolgt, nachdem die Pflanze im ersten verbundenen Wachstumssubstrat aus Mineralwolle nicht mehr als 4 Wochen, bevorzugt nicht mehr als 3 Wochen Wurzeln ziehen und wachsen konnte.

11. Ein Verfahren entsprechend einem der vorangegangenen Ansprüche, bei dem eine Reihe von Pflanzen gezüchtet werden und bei dem vor dem Versetzen der Pflanzen im ersten verbundenen Wachstumssubstrat aus Mineralwolle in das zweite verbundene Wachstumssubstrat aus Mineralwolle, ein Auswahlschritt stattfindet, bei dem Pflanzen unzulänglicher Qualität nicht versetzt, sondern entsorgt werden.

12. Ein Verfahren entsprechend einem der vorangegangenen Ansprüche, bei dem das zweite verbundene Wachstumssubstrat aus Mineralwolle eine Länge im Bereich von 7,5 bis 100 cm, eine Breite im Bereich von 7,5 bis 30 cm und eine Höhe im Bereich von 6,5 bis 20 cm aufweist.

13. Ein Verfahren entsprechend einem der vorangegangenen Ansprüche, bei dem das zweite verbundene Wachstumssubstrat aus Mineralwolle eine Länge im Bereich von 7,5 bis 60 cm, eine Breite im Bereich von 7,5 bis 30 cm und eine Höhe im Bereich von 6,5 bis 16 cm aufweist.

14. Ein Verfahren entsprechend einem der vorangegangenen Ansprüche, bei dem das zweite verbundene Wachstumssubstrat aus Mineralwolle ein Volumen von mindestens 1200 cm³, bevorzugt mindestens 1500 cm³, und bevorzugter mindestens 2500 cm³ aufweist.

15. Ein Verfahren entsprechend einem der vorangegangenen Ansprüche, bei dem das zweite verbundene Wachstumssubstrat aus Mineralwolle eine Länge im Bereich von 19 bis 29 cm, eine Breite im Bereich von 15 bis 25 cm und eine Höhe im Bereich von 6 bis 10 cm aufweist.

16. Ein Verfahren entsprechend einem der Ansprüche 1 bis 14, bei dem das zweite verbundene Wachstumssubstrat aus Mineralwolle eine Länge im Bereich von 35 bis 45 cm, eine Breite im Bereich von 8 bis 16 cm und eine Höhe im Bereich von 6 bis 10 cm aufweist.

17. Ein Verfahren entsprechend einem der vorangegangenen Ansprüche, bei dem die Pflanze für mindestens vier Tage bei einer Temperatur von 2 bis 5 °C gelagert wird, während sie sich im ersten verbundenen Wachstumssubstrat aus Mineralwolle befindet und bevor sie in das zweite verbundene Wachstumssubstrat aus Mineralwolle versetzt wird.

18. Ein Verfahren entsprechend Anspruch 17, bei dem die Lagerzeit bei 2 bis 5 °C bis zu 10 Wochen beträgt.

19. Ein Verfahren entsprechend einem der vorangegangenen Ansprüche, bei dem nachdem dem Versetzen des ersten verbundenen Wachstumssubstrats aus Mineralwolle in das zweite verbundene Wachstumssubstrat aus Mineralwolle die Pflanze für mindestens weitere sechs Wochen wachsen kann, wobei alle diese Schritte in einer ersten Zuchteinrichtung stattfinden und das zweite verbundene Wachstumssubstrat aus Mineralwolle dann zu einer zweiten Zuchteinrichtung gebracht wird und vor diesem Versetzen ein Auswahlschritt stattfindet, bei dem Pflanzen unzulänglicher Qualität nicht versetzt, sondern entsorgt werden.

## Revendications

1. Procédé de culture florale consistant à :
positionner une plante sous la forme d'une bouture de la culture dans un premier substrat de culture de laine minérale cohérent ayant un volume n'excédant pas 150 cm³,
laisser la plante prendre racine et se développer pendant au moins 12 jours,
transférer la plante à l'intérieur du premier substrat de croissance de laine minérale cohérent de manière à ce que le premier substrat de croissance de laine minérale cohérent soit en contact avec un deuxième substrat de croissance de laine minérale cohérent ayant une largeur d'au moins 5 cm et une hauteur d'au moins 5 cm.
et laisser la plante se développer pendant au moins 4 semaines supplémentaires avant de réaliser toute récolte de culture florale.

2. Procédé selon la revendication 1 consistant à arroser la plante tandis qu'elle est positionnée dans le premier substrat de croissance de laine minérale cohérent au moins tous les trois jours, de préférence au moins une fois tous les deux jours.

3. Procédé selon la revendication 1 ou la revendication 2, dans lequel la culture florale est pluriannuelle.

4. Procédé selon l'une quelconque des revendications précédentes, dans lequel la culture florale est une rose.

5. Procédé selon l'une quelconque des revendications précédentes, dans lequel le contact entre le premier substrat de croissance de laine minérale cohérent et le deuxième substrat de croissance de laine minérale cohérent est réalisé en ménageant une découpe dans le deuxième substrat de croissance de laine minérale cohérent dans lequel est placé un seul premier substrat de croissance de laine minérale cohérent.

6. Procédé selon l'une quelconque des revendications précédentes dans lequel deux premiers substrats de croissance de laine minérale cohérents sont mis en contact avec un seul deuxième substrat de croissance de laine minérale cohérent.

7. Procédé selon l'une quelconque des revendications précédentes dans lequel le premier substrat de croissance de laine minérale cohérent a un volume n'excédant pas 80 3
cm.

8. Procédé selon l'une quelconque des revendications précédentes, dans lequel le premier substrat de croissance de laine minérale cohérent a une hauteur d'au moins 2,5 cm, de préférence d'au moins 4 cm, mieux encore d'au moins 5,5 cm.

9. Procédé selon l'une quelconque des revendications précédentes dans lequel le transfert de la plante à l'intérieur du premier substrat de croissance de laine minérale cohérent au deuxième substrat de croissance de laine minérale cohérent est réalisé après que la plante a été laissée prendre racine et se développer dans le premier substrat de croissance de laine minérale pendant au moins 14 jours.

10. Procédé selon l'une quelconque des revendications précédentes dans lequel le transfert de la plante à l'intérieur du premier substrat de croissance de laine minérale cohérent au deuxième substrat de croissance de laine minérale est réalisé après que la plante a été laissée prendre racine et se développer dans le premier substrat de croissance de laine minérale pendant pas plus de 4 semaines, de préférence pas plus de 3 semaines.

11. Procédé selon l'une quelconque des revendications précédentes dans lequel une pluralité de plantes sont cultivées et dans lequel avant le transfert des plantes à l'intérieur du premier substrat de croissance de laine minérale cohérent au deuxième substrat de croissance de laine minérale cohérent, une étape de sélection a lieu lors de laquelle les plantes de qualité insuffisamment élevée ne sont pas transférées mais sont au contraire mises au rebut.

12. Procédé selon l'une quelconque des revendications précédentes dans lequel le deuxième substrat de croissance de laine minérale cohérent a une longueur comprise entre 7,5 et 100 cm, une largeur comprise entre 7,5 et 30 cm et une hauteur comprise entre 6,5 et 20 cm.

13. Procédé selon l'une quelconque des revendications précédentes dans lequel le deuxième substrat de croissance de laine minérale cohérent a une longueur comprise entre 7,5 et 60 cm, une largeur comprise entre 7,5 et 30 cm et une hauteur comprise entre 6,5 et 16 cm.

14. Procédé selon l'une quelconque des revendications précédentes dans lequel le deuxième substrat de laine minérale cohérent a un volume d'au moins 1200 cm³, de préférence d'au moins 1500 cm³, mieux encore d'au moins d'au moins 2500 cm³.

15. Procédé selon l'une quelconque des revendications précédentes dans lequel le deuxième substrat de laine minérale cohérent a une longueur comprise entre 19 et 29 cm, une largeur comprise entre 15 et 25 cm et une hauteur comprise entre 6 et 10 cm.

16. Procédé selon l'une quelconque des revendications 1 à 14, dans lequel le deuxième substrat de croissance de laine minérale a une longueur comprise entre 35 et 45 cm, une largeur comprise entre 8 et 16 cm et une hauteur comprise entre 6 et 10 cm.

17. Procédé selon l'une quelconque des revendications précédentes dans lequel la plante est stockée à une température comprise entre 2 et 5°C pendant au moins quatre jours tandis qu'elle est positionnée dans le premier substrat de croissance de laine minérale cohérent et avant son transfert au deuxième substrat de croissance de laine minérale cohérent.

18. Procédé selon la revendication 17, dans lequel la période de stockage à une température comprise entre 2 et 5°C ne doit pas dépasser 10 semaines.

19. Procédé selon l'une quelconque des revendications précédentes dans lequel après le transfert du substrat de croissance de laine minérale cohérent au deuxième substrat de croissance de laine minérale cohérent, la plante est laissée se développer pendant au moins six semaines supplémentaires et toutes ces étapes ont lieu dans une première installation de culture et le deuxième substrat de croissance de laine minérale cohérent est ensuite transféré à une deuxième installation de culture, et avant ce transfert, une étape de sélection a lieu lors de laquelle les plantes de qualité insuffisamment élevée ne sont pas transférées mais sont au contraire mises au rebut.
